(19) Europäisches Patentamt / European Patent Office / Office européen des brevets

(11) **EP 3 447 459 A1**

(12) **EUROPEAN PATENT APPLICATION**

(43) Date of publication:
   **27.02.2019   Bulletin 2019/09**

(51) Int Cl.:
   **G01H 1/00** *(2006.01)*

(21) Application number: **17187946.3**

(22) Date of filing: **25.08.2017**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **MA MD**

(71) Applicant: **Vestel Elektronik Sanayi ve Ticaret A.S.**
   **45030 Manisa (TR)**

(72) Inventor: **KARATAS, Mustafa**
   **45030 Manisa (TR)**

(74) Representative: **Ascherl, Andreas et al**
   **KEHL, ASCHERL, LIEBHOFF & ETTMAYR**
   **Patentanwälte - Partnerschaft**
   **Emil-Riedel-Strasse 18**
   **80538 München (DE)**

(54) **A SYSTEM FOR TESTING VIBRATION OF ALL TYPE OF COMPRESSOR**

(57)   The present invention refers to a system for testing vibration of a compressor according to the present invention preferably comprises a plurality of piezo electric sensor array (2a), a plurality of amplifiers (4), a plurality of filter circuit (5) and, a microcontroller (6). The plurality of piezo electric sensor array (2a) is designed as a casing structure to cover the compressor (1) structure. The plurality of piezo electric sensor array (2a) are provided to convert force delivered to the piezo electric sensor array (2a) to electric charge and to transfer the electric charge to the amplifiers (4) via a plurality of piezo electric sensor wires (3). The amplifiers (4) are provided to amplify the electric charge from the piezo electric sensor (2) and send to the filter circuits thereby to obtain electric charge in acceptable range by the microcontroller (6). The microcontroller (6) is configured for accepting the electric charge from the filter circuit (5) and sending vibration data to a user interface (7) and/or to store vibration data in a memory for further evaluation of motor drives parameter effect on the compressor (1).

Fig. 1

EP 3 447 459 A1

## Description

This invention refers to a system for testing vibration of all type of compressor according to claim 1, and a method according to claim 8.

## Background of the Invention

Compressors are mainly used for many products to increase the pressure of any gas or oil. To obtain good pressure level, compressors have a BLDC or AC motor accumulating to the pistons in a speed its inside, due to it can cause some vibration depending on structure, speed or drive method of compressor or the vibration occurred by such ball bearings; wrong location of machine assemblies, such as gears, motors, or shafts; such as motors, rotors, gears, pistons, this is a problem because the vibration is a mechanical issue causing distorted sound in high decibel level and to care with this problem, some methods and lay out works are done inside and/or outside of the compressor.

Prior art document US5541857A discloses a process and a computer implemented system for monitoring vibration in the blades of the rotor and stator of an axial compressor through measurement of pressure fluctuations of the dynamic pressure field in the region of the compressor housing in at least one stage of the compressor by means of at least one pressure sensing device sensitive to differential pressure fluctations affecting the blades at the characteristic frequency of the stage. The process and computer implemented system also assist in the control of the compressor by forwarding a status respecting rotor and stator mechanical vibration to the control unit. The prior art has at least one pressure sensing device sensitive to differential pressure fluctuations

Prior art document CN203627140U discloses a shockproof compressor pump capable of monitoring vibration data. The shockproof compressor pump comprises a shell; the inlet end of the shell is connected with a driving motor provided with an air inlet; the outlet end of the shell is connected with an air outlet component; the upper surface of the shell is provided with a lifting handle; the lower surface of the shell is provided with mounting feet; a buffer tank of which the upper part is in threaded connection with a safety valve and the lower part is in threaded connection with a drain valve is arranged between the shell and the air outlet component; one side face of the shell is detachably connected with a vibration measurement instrument; the outlet end on the upper surface of the shell is in threaded connection with a first vibration sensor; the main surface of the driving motor is in threaded connection with a second vibration sensor; the first and second vibration sensors are connected to the vibration measurement instrument; the mounting feet are connected with shock absorbers in a pluggable way; the air inlet is in threaded connection with a filter device. The shockproof compressor pump capable of monitoring the vibration data has the advantages of timely detecting the vibration data, damping and the like.

Prior art document CN102262815A discloses a vibration signal ZigBee technology for largescale rotating equipment for real-time monitoring method. Summarized as: the use of a vibration sensor mounted on a large rotating machinery, ZigBee module, a central processor to form a real-time vibration monitoring system, which uses ZigBee mesh networking topologies, mounted on a large rotating machinery vibration sensor vibration monitoring data to the ZigBee module, ZigBee module and then send the relevant data to the central processor, the central processor will process the data after the timely feedback to management, so that managers can take the test at any time the data needed to improve both flexibility and work efficiency and ensure the large rotating equipment operation safety.

The subject-matter of the prior arts discussed herein can test the vibration of a compressor at one point alone and data sensed only at that point is taken from setups. Therefore, analysis of vibration data at one point of the compressor cannot provide the exact evaluation of the motor drives. Further, that vibration data may contain an approximate value and not the exact value. Hence, re-designing the motor drive setup to control the vibration of the compressor may lead to wrong design.

## Object of the Invention

It is therefore the object of the present invention to provide a device, in particular a system for testing vibration of all type of compressor, and a method that provides an accurate results for the vibration test that can be conducted for all type of compressor using piezo electric sensors array compared to the known devices and methods.

## Description of the Invention

The before mentioned object is solved by a system for testing vibration of a compressor according to claim 1. The system for testing vibration of a compressor according to the present invention preferably comprises a plurality of piezo electric sensor array, a plurality of amplifiers, a plurality of filter circuit and, a microcontroller. The plurality of piezo electric sensor array is designed as a casing structure to cover the compressor structure. The plurality of piezo electric sensor array are provided to convert force delivered to the piezo electric sensor array to electric charge and to transfer the electric charge to the amplifiers via a plurality of piezo electric sensor wires. The amplifiers are provided to amplify the electric charge from the piezo electric sensor and send to the filter circuits thereby to obtain electric charge in acceptable range by the microcontroller. The microcontroller is configured for accepting the electric charge from the filter circuit and sending vibration data to a user interface and/or to store vibration data in a memory for further evaluation of motor drives parameter effect on the compressor.

This solution is beneficial since such a system can utilize multiple piezo sensors in order to get multiple data output from the vibrated area thereby to get a better understanding of mechanical issues. Eventually, the arrangement of multiple piezo sensors based on the size of the compressor and proximity between sensors, the surrounding vibration of the compressor can be obtained.

The system for testing vibration of the compressor according to the present invention can be applied around an air conditioner compressor to reduce sound in the air conditioner compressor.

Further preferred embodiments are subject-matter of dependent claims and/or of the following specification parts.

According to a preferred embodiment of the present invention, the amplifiers for piezo electric sensor are used as voltage mode amplifiers and charge mode amplifiers. The plurality of piezo electric sensors utilized to get multiple data output from a vibrated area thereby to obtain surrounding vibration for better understanding of mechanical issues of the compressor. The number of piezo electric sensors that are required for testing depends upon the compressor size. The microcontroller can be configured for sending vibration data to the user interface via any one of serial communication protocols that includes a SPI, USB or can bus and so on. The filter circuit may include a high pass filter circuit and/or low pass filter circuit. Further, the system performs vibration testing for all type of compressors.

The before mentioned object is also solved by a method for testing vibration of a compressor according to claim 8. Said method preferably comprises the steps: method for testing vibration of a compressor comprising the step of, covering the compressor structure using a plurality of piezo electric sensor array for absorbing the vibration force from the compressor, allowing the piezo electric sensor array to convert force absorbed by the sensor array to electric charge, transferring the electric charge to amplifiers via a plurality of piezo electric sensor wires, allowing the amplifiers to amplify the electric charge from the piezo electric sensor using voltage mode amplifier or charge mode amplifiers, sending the amplified electric charge to filter circuits thereby to obtain electric charge in acceptable range by a microcontroller, allowing the microcontroller to accept the electric charge from the filter circuit, and allowing the microcontroller to send vibration data to a user interface and/or to store vibration data in a memory for further evaluation of motor drives parameter effect on the compressor.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

**Brief Description of the Drawings**

Fig. 1   illustrates the schematic diagram for vibration test setup for compressor, according to an embodiment of the present invention;

Fig. 2   illustrates the typical charge amplifiers for piezo film sensors, according to the prior art; and

Fig. 3   illustrates the typical non inverting voltage amplifiers for piezo film sensors, according to the prior art.

**Detailed Description of the Drawings**

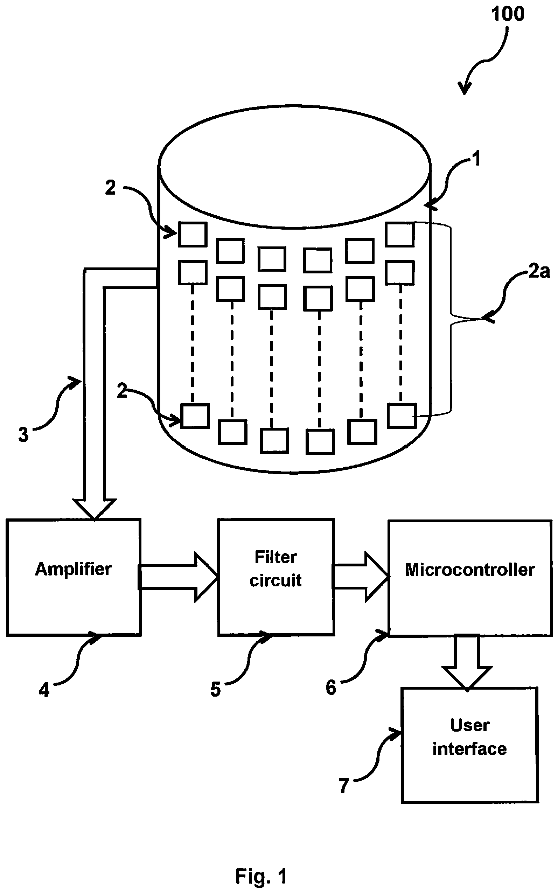

Fig. 1 illustrates the schematic diagram 100 for vibration test setup for compressor, according to an embodiment of the present invention. The system for testing vibration of a compressor 1 according to the present invention preferably comprises a plurality of piezo electric sensor array 2a, a plurality of amplifiers 4, a plurality of filter circuit 5 and, a microcontroller 6. The plurality of piezo electric sensor array 2a is designed as a casing structure to cover the compressor 1 structure. The plurality of piezo electric sensor array 2a is provided to convert force delivered to the piezo electric sensor array 2a to electric charge. The piezo electric sensor array 2a is connected to the amplifiers 4 using the plurality of piezo electric sensor wires 3. The piezo electric sensor array 2a can transfer the electric charge to the amplifiers 4 via a plurality of piezo electric sensor wires 3. The amplifiers 4 for piezo electric sensor 2 are used as voltage mode amplifiers 300 and/or charge mode amplifiers 200. The amplifiers 4 are provided to amplify the electric charge from the piezo electric sensor 2. Then the amplifiers 4 can send the amplified electric charge or signal to the filter circuits thereby to obtain electric charge in acceptable range by the microcontroller. Further, the filter circuit may include a high pass filter circuit and/or low pass filter circuit depend upon the requirement.

The microcontroller is configured for accepting the electric charge from the filter circuit and sending vibration data to a user interface and/or to store vibration data in a memory for further evaluation of motor drives parameter effect on the compressor 1. The microcontroller configured for sending vibration data to the user interface via any one of serial communication protocols that includes a SPI, USB or can bus and so on.

Further, the system can perform vibration testing for all type of compressors 1. In addition to that, the plurality of piezo electric sensors array 2a can be utilized to get multiple data output from a vibrated area thereby to obtain surrounding vibration for better understanding of mechanical issues of the compressor 1. The number of piezo electric sensors 2 required for testing depends upon the compressor 1 size.

This solution is beneficial since such a system can utilize multiple piezo sensors in order to get multiple data output from the vibrated area thereby to get a better understanding of mechanical issues. Eventually, the arrangement of multiple piezo sensors based on the size of the compressor 1 and proximity between sensors, the surrounding vibration of the compressor 1 can be obtained. The vibration data from the microcontroller further processed in the user interface 7 and evaluated by a user to identify the real time problems in the compressor 1 and motor drive design. The system for testing vibration of the compressor 1 according to the present invention can be applied around an air conditioner compressor 1 to reduce sound in the air conditioner compressor 1.

According to an embodiment, the method provided for testing vibration of a compressor 1. The method preferably comprises the steps: method for testing vibration of a compressor 1 comprising the step of, covering the compressor 1 structure using a plurality of piezo electric sensor array 2a for absorbing the vibration force from the compressor 1, allowing the piezo electric sensor array 2a to convert force absorbed by the sensor array to electric charge, transferring the electric charge to amplifiers 4 via a plurality of piezo electric sensor wires 3, allowing the amplifiers 4 to amplify the electric charge from the piezo electric sensor 2 using voltage mode amplifier 300 or charge mode amplifiers 200, sending the amplified electric charge to filter circuits thereby to obtain electric charge in acceptable range by a microcontroller, allowing the microcontroller to accept the electric charge from the filter circuit, and allowing the microcontroller to send vibration data to a user interface 7 and/or to store vibration data in a memory for further evaluation of motor drives parameter effect on the compressor 1.

According to an exemplary embodiment, the basic piezo sensor from measurement specialties is often used for vibration and shock measurements. For example, a small alternating current and large voltage (up to ±100V and so on) is created when the film moves back and forth, according to the force applied on the piezo electric sensor 2. Subsequently, the voltage transferred to a simple resistor can reduce the voltage down to ADC levels in order to manipulate the vibration data for impact sensing for all point of compressor 1. The data taken from the setup (piezo array) is collected by a microcontroller and analyzed to determine the real time problem in the compressor 1 structure.

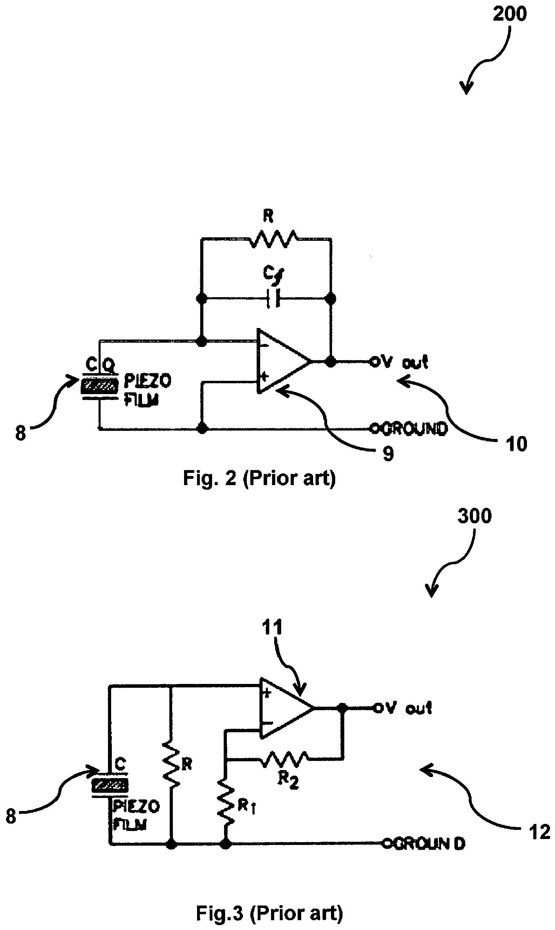

Fig. 2 illustrates the typical charge amplifier 200 for piezo film sensors, according to the prior art. The typical charge amplifier 200 for piezo film sensors 8 comprises of charge amplifier diode 9, a feedback capacitor parallelly connected to a resistor $R_f$. The piezo electric sensor film 8 is connected to the amplifying circuit. Due to the vibration absorbed by the piezo electric sensor film 8, a charge Q is generated by the film. The output voltage 10 may be approximately equal to the ratio between charge and feedback capacitance $C_f$.

$$V_{out} = -\frac{Q}{C_f}$$

$$voltage\ gain = -\frac{Q}{C_f}$$

$$Time\ constant = RC_f$$

$$cut - off\ frequency = -\frac{1}{2\pi RC_f}$$

Further, using the formulas the voltage gain, time constant and cut-off frequency can be calculated before designing the amplifier 4 circuit. The negative sign indicates the charge Q from the film 8 connected to the diode in the inverting terminal.

Fig. 3 illustrates the typical non inverting voltage amplifier 300 for piezo film sensors, according to the prior art. The typical non inverting voltage amplifier 300 comprises of non-inverting voltage amplifier diode 11, a resistor parallelly connected to the piezo electric sensor film 8. The resistor can provide input voltage from the piezo electric sensor film 8 to the non-inverting voltage amplifier diode to obtain the amplified output voltage 12. Thus the amplification process of voltage from the piezo electric sensor film 8 performed before transferring result to the filter circuit.

$$voltage\ gain = 1 + \frac{R_2}{R_1}$$

$$Time\ constant = RC$$

Further, using the formulas the voltage gain, and time constant can be calculated before designing the amplifier 4 circuit.

Thus, the present invention refers to a system for testing vibration of a compressor according to the present invention preferably comprises a plurality of piezo electric sensor array 2a, a plurality of amplifiers 4, a plurality of filter circuit (5) and, a microcontroller 6. The plurality of piezo electric sensor array 2a is designed as a casing structure to cover the compressor 1 structure. The plurality of piezo electric sensor array (2a) are provided to convert force delivered to the piezo electric sensor array 2a to electric charge and to transfer the electric charge to the amplifiers 4 via a plurality of piezo electric sensor wires 3. The amplifiers 4 are provided to amplify the electric charge from the piezo electric sensor 2 and send to the filter circuits thereby to obtain electric charge in acceptable range by the microcontroller 6. The microcontroller 6 is configured for accepting the electric charge from the filter circuit 5 and sending vibration data to a user interface 7 and/or to store vibration data in a memory for further evaluation of motor drives parameter effect on the compressor 1.

**List of reference numbers**

| | |
|---|---|
| 1 | compressor |
| 2 | plurality of piezo electric sensor |
| 2a | plurality of piezo electric sensor array |
| 3 | piezo electric sensor wires |
| 4 | amplifier or voltage amplifier |
| 5 | Filter circuit |
| 6 | microcontroller |
| 7 | user interface |
| 8 | piezo electric sensor film |
| 9 | charge amplifier diode |
| 10 | output voltage from the charge amplifier |
| 11 | non inverting voltage amplifier diode |
| 12 | output voltage from the charge amplifier |
| 200 | charge amplifier |
| 300 | Voltage mode amplifier |

**Claims**

1. A system for testing vibration of a compressor comprises of,

a plurality of amplifiers (4) a plurality of filter circuit (5) and, a microcontroller (6);
**characterized in that**
the system further includes a plurality of piezo electric sensor array (2a); wherein the plurality of piezo electric sensor array (2a) is designed as a casing structure to cover the compressor (1) structure;
wherein the plurality of piezo electric sensor array (2a) is provided to convert force delivered to the piezo electric sensor array (2a) to electric charge and to transfer the electric charge to the amplifiers (4) via a plurality of piezo electric sensor wires (3);
wherein the amplifiers (4) is provided to amplify the electric charge from the piezo electric sensor (2) and send to the filter circuits thereby to obtain electric charge in acceptable range by the microcontroller (6);
wherein the microcontroller (6) is configured for accepting the electric charge from the filter circuit (5) and sending vibration data to a user interface (7) and/or to store vibration data in a memory for further evaluation of motor drives parameter effect on the compressor (1).

2. The system of claim 1, wherein the amplifiers (4) for piezo electric sensor (2) is used as voltage mode amplifiers (300) and charge mode amplifiers (200).

3. The system of claim 1, wherein the plurality of piezo electric sensors (2) utilized to get multiple data output from a vibrated area thereby to obtain surrounding vibration for better understanding of mechanical issues of the compressor (1).

4. The system of claim 1, wherein the number of piezo electric sensors (2) required for testing depends upon the compressor (1) size.

5. The system of claim 1, wherein the microcontroller (6) is configured for sending vibration data to the user interface (7) via any one of serial communication protocols that includes a SPI, USB or can bus and so on.

6. The system of claim 1, wherein the filter circuit (5) includes a high pass filter circuit and/or low pass filter circuit.

7. The system of claim 1, wherein the system performs vibration testing for all type of compressors (1).

8. A method for testing vibration of a compressor comprising the step of,
covering the compressor (1) structure using a plurality of piezo electric sensor array (2a) for absorbing the vibration force from the compressor (1);
allowing the piezo electric sensor array (2a) to convert force absorbed by the sensor array to electric charge;
transferring the electric charge to amplifiers (4) via a plurality of piezo electric sensor wires (3);
allowing the amplifiers (4) to amplify the electric charge from the piezo electric sensor (2) using voltage mode amplifier or charge mode amplifiers (4);
sending the amplified electric charge to filter circuits thereby to obtain electric charge in acceptable range by a microcontroller (6);
allowing the microcontroller (6) to accept the electric charge from the filter circuit; and allowing the microcontroller (6) to send vibration data to a user interface (7) and/or to store vibration data in a memory for further evaluation of motor drives parameter effect on the compressor (1).

**Fig. 1**

Fig. 2 (Prior art)

Fig.3 (Prior art)

Europäisches
Patentamt

European
Patent Office

Office européen
des brevets

# EUROPEAN SEARCH REPORT

Application Number

EP 17 18 7946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/033695 A1 (SAHARA JUNTARO [JP] ET AL) 7 February 2008 (2008-02-07) * paragraphs [0001], [0268], [0270], [0273], [0341]; claim 10 * * paragraph [0428] - paragraph [0438]; figure 51 * | 1-8 | INV. G01H1/00 |
| Y | US 5 005 353 A (ACTON ELIZABETH [GB] ET AL) 9 April 1991 (1991-04-09) * column 1, line 10 - line 14 * * column 30, line 29 - column 31, line 11 * | 1-8 | |
| A | US 2012/287749 A1 (KUTLIK ROY LESTER [US] ET AL) 15 November 2012 (2012-11-15) * paragraph [0041] - paragraph [0042] * | 1-8 | |
| A | US 6 399 939 B1 (SUNDARESAN MANNUR J [US] ET AL) 4 June 2002 (2002-06-04) * column 1, line 5 - line 10; claim 1 * | 1-8 | |

| | TECHNICAL FIELDS SEARCHED (IPC) |
|---|---|
| | G01H F04D |

The present search report has been drawn up for all claims

| Place of search | Date of completion of the search | Examiner |
|---|---|---|
| The Hague | 7 March 2018 | Lorne, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 7946

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2018

| Patent document cited in search report | | Publication date | Patent family member(s) | | Publication date |
|---|---|---|---|---|---|
| US 2008033695 | A1 | 07-02-2008 | US 2008033695 A1<br>WO 2006043511 A1 | | 07-02-2008<br>27-04-2006 |
| US 5005353 | A | 09-04-1991 | US 5005353 A<br>US 5082421 A<br>US 5141391 A | | 09-04-1991<br>21-01-1992<br>25-08-1992 |
| US 2012287749 | A1 | 15-11-2012 | US 2012287749 A1<br>US 2015247751 A1<br>WO 2012158371 A2 | | 15-11-2012<br>03-09-2015<br>22-11-2012 |
| US 6399939 | B1 | 04-06-2002 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5541857 A
- CN 203627140 U
- CN 102262815 A